Europäisches Patentamt

European Patent Office

Office européen des brevets

(11) Publication number: **0 338 082**
**A1**

## EUROPEAN PATENT APPLICATION
### published in accordance with Art. 158(3) EPC

(21) Application number: 88908348.1

(22) Date of filing: 21.09.88

(86) International application number:
PCT/JP88/00957

(87) International publication number:
WO 89/02988 (06.04.89 89/08)

(51) Int. Cl.⁴: **F16B 21/04 , A44C 17/02 , A01K 97/02**

(30) Priority: 22.09.87 JP 239794/87
24.03.88 JP 71078/88

(43) Date of publication of application:
25.10.89 Bulletin 89/43

(84) Designated Contracting States:
AT BE CH DE FR GB IT LI LU NL SE

(71) Applicant: KATO, Hiroya
8-28, Hyakurakuso 4-chome
Minoo-shi, Osaka 562(JP)

(72) Inventor: KATO, Hiroya
8-28, Hyakurakuso 4-chome
Minoo-shi, Osaka 562(JP)

(74) Representative: Cline, Roger Ledlie et al
EDWARD EVANS & CO. Chancery House
53-64 Chancery Lane
London WC2A 1SD(GB)

(54) LOCKING DEVICE AND PRODUCT USING SAME.

(57) The locking device of the invention comprises a fastening member A and a receiving member B. The spring force of a resilient member installed in the receiving member B enables the fastening member A to be reliably held in the receiving member B, and removal thereof is also easy. The end portion of the fastening member A is formed in the shape of the letter "T", in which a rod (2) extending perpendicularly to left and right with respect to a support post (1) is fixed to an end of the support post (1). A vertically acting resilient member (4) is installed in the chamber (3) of the receiving member B, and the upper wall (5) of the chamber (3) is formed with an elongated opening (6) disposed above the resilient member (4), while the inner surface of the upper wall (5) of the chamber (3) is formed with a groove-like recess (7) extending transversely of the elongated opening (6). The elongated opening (6) and groove-like recess (7) of the receiving member B are shaped to house the rod (2) of the fastening member A therein; therefore, by inserting the rod (2) of the fastening member A into the elongated opening (6) in the receiving member B and rotating it in the chamber (3) of the receiving member B up to the position of the groove-like recess (7), it is possible to fit the rod of the fastening member A in the groove-like recess of the receiving member B by the repulsive force of the resilient member (4).

The fastening member A is installed either on a decorative member (10) for a personal ornament, such as a brooch, necklace, earring, button or the like, or on an attaching member (11) for an article ot be ornamented, while the receiving member B is installed on the other; thus, a personal ornament which enables the decorative member (10) to be exchanged is provided.

Fig. 2

Fig. 3

Fig. 1

## LOCKING DEVICE AND PRODUCT USING THE SAME

### TECHNICAL FIELD

The present invention relates to a novel device and applications thereof.

### BACKGROUND ART

Various personal ornaments including brooches, necklaces, earrings and buttons have been known from old. However, none of them are designed so that their decorative members can be exchanged; thus, fastners are required, one for each of the personal ornaments, and storage thereof takes substantial space and is uneconomical.

To attach handles to kettles or to assemble scaffolds in such a manner as to secure safety, complicated attaching systems using set screws, bolts and nuts have been required; they are far from being easily handled by laymen.

Accordingly, it is an object of the invention to provide a locking device which can be reliably attached and detached by a single operation, applicable in many fields for attaching the ornamental members of personal ornaments, towing vehicles and assembling building members.

### DISCLOSURE OF THE INVENTION

A locking device according to the invention comprises a fastening member A and a receiver member B, said receiving member B being internally provided with an resilient member exerting a spring force whereby the fastening member A can be easily held in the receiving member B, the removal thereof being also easily.

More particularly, in the present invention, the front end of the fastening member A is formed in the letter "T", in which a rod extending perpendicularly to left and right with respect to the support post is fixed to an end of the support post. The receiving member B has a chamber containing a resilient member which vertically acts, the upper wall of the chamber is formed with a transversely extending elongated opening disposed above the resilient member, and the inner surface of the upper wall is formed with a groove-like recess extending transversely of the elongated opening. In addition, the elongated opening and groove-like recess in the receiving member B are shaped to receive the rod of the fastening member A.

Therefore, in the locking device of the invention, the rod of the fastening member A is inserted in the elongated opening in the receiving member B and rotated in the chamber of the receiving member B until it reaches the position of the groove-like recess, whereupon the rod of the fastening member a is fitted in a groove-like recess of the receiving member B by the repulsive force of the resilient member; thus, reliable locking is made possible.

The materials and sizes of such fastening member A and receiving member B are not restricted but may be suitably selected according to the intended object. Further, these members may be independently formed and them attached to an article to be mounted; alternatively, they may be formed integrally with such article.

In addition, in the invention, the resilient member installed in the chamber of the receiving member B may be rubber, plastic, metal or the like so long as it has spring resilience. It is important that the resilient member is oriented in the chamber so that it exerts vertically directed resilient repulsive force.

### BRIEF DESCRIPTION OF THE DRAWINGS

Fig. 1 is a perspective view of a receiving member B in an example of a locking device of the invention;

2. Fig. 2 is a front view (I) and a side view (II) of a fastening member A in the locking device of Fig. 1;

Fig. 3 is a sectional view (I) taken along the line a-a and a sectional view (II) taken along the line b-b through the receiving member of Fig. 1;

Fig. 4 is an explanatory view showing the locking device of Fig. 1 in use;

Fig. 5 is a perspective view of a receiving member B in an example of a locking device of the invention;

Fig. 6 is a front view (I) and a side view (II) of a fastening member A in the locking device of Fig. 5;

Fig. 7 is a sectional view taken along the line a-a and a sectional view taken along the line b-b through the receiving member B of Fig. 5;

Fig. 8 is an explanatory view of the locking member of Fig. 5 in use;

Fig. 9 is a perspective view showing an example of a personal ornament according to the invention;

Fig. 10 is a sectional view of members forming a personal ornament according to the invention;

Fig. 11 is a perspective view of the members of Fig. 10 (I being a perspective view taken from the front and II being a perspective view taken from the rear);

Fig. 12 is a sectional view of a second member Y and a third member Z in Fig. 10 which form attaching members;

Fig. 13 is a sectional view showing how the ornamental members in the example shown in Fig. 10 are attached and detached;

Fig. 14 is a perspective view of a ground bait basket using a locking device according to the invention;

Fig. 15 is a side view showing an example of a fastening member A;

Fig. 16 is a sectional view showing an example of a receiving member B; and

Fig. 17 is a sectional view showing an example of a locking device according to the invention.

## BEST MODE FOR EMBODYING THE INVENTION

The invention will now be described in more detail with reference to examples of the invention shown in the drawings.

### Example

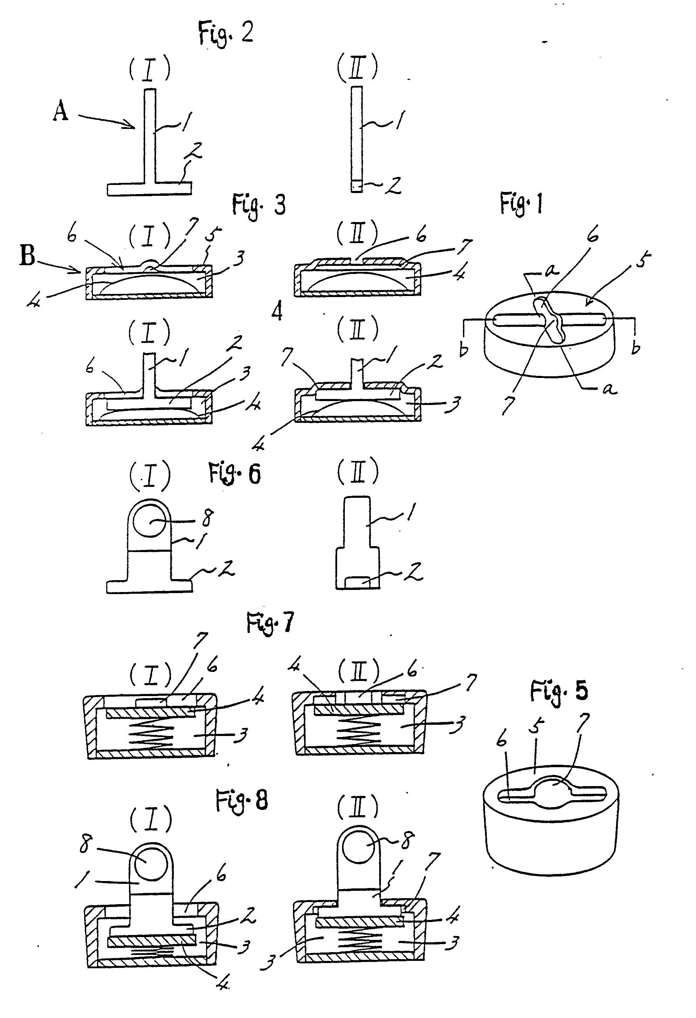

The locking device in this example comprises a T-shaped fastening member A having a metal support post (1) with a rod (2) attached to the front end of the support post (1) to extend normal to the latter (see Fig. 2), and a receiving member B having a metal chamber (3) with a plate spring serving as a resilient member (4) received therein an elongated opening (6) formed in the upper wall (5) of the chamber (3), and a groove-like recess (7) formed in the inner surface of the upper wall (5) in such a manner as to raise the upper wall (5) (see Figs. 1 and 3).

The elongated opening (6) and groove-like recess (7) of the receiving member B are substantially the same in shape as the rod (2) of the fastening member A but are made somewhat larger so as to allow insertion of retention of the rod (2).

Such locking device is used, as shown in Fig. 4A, by inserting the rod (2) on the front end of the fastening member A into the elongated opening (6) in the receiving member B, pressing the resilient member (4), turning the rod through 90 degrees and removing the pressing force, whereupon the rod (2) is pressed against the groove-like recess (7) by the spring force of the resilient member (4) and is thereby reliably held in position (see Fig. 4B).

### Example 2

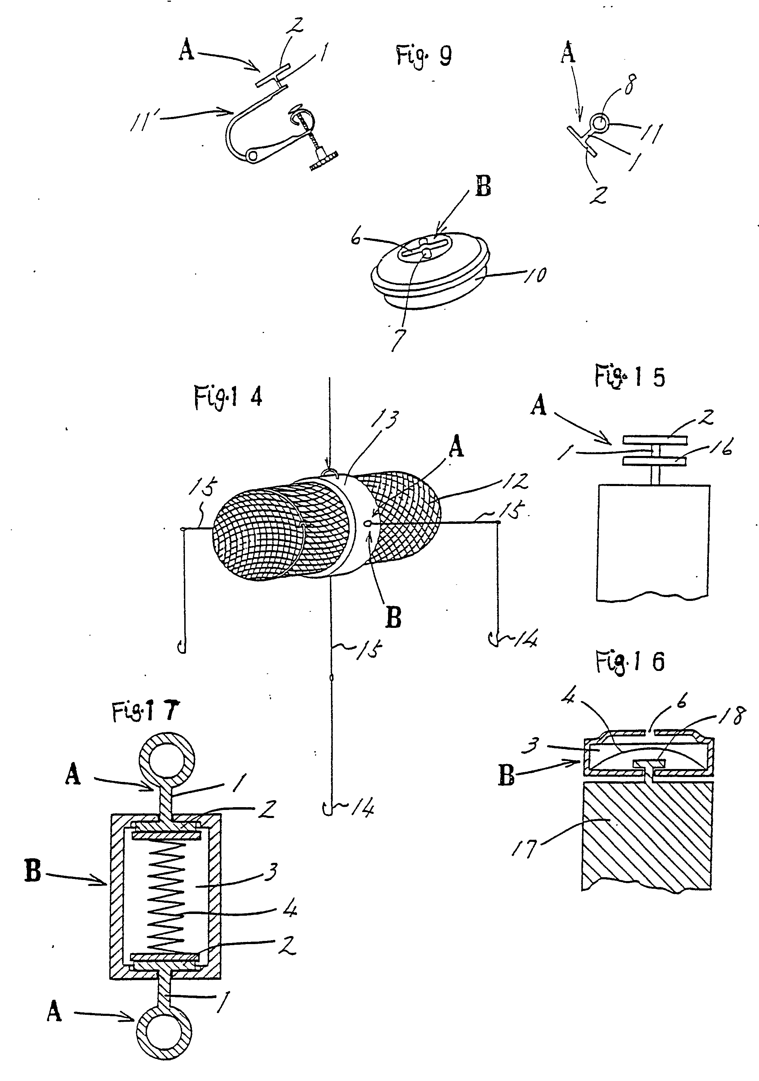

In this example, the support post (1) of the fastening member A is formed somewhat thicker as shown in Fig. 6, while the resilient member (4) in the receiving member B is composed of a metal plate and a coil spring and the groove-like recess (7) is formed by cutting the inner surface of the upper wall (5) of the chamber (3) (see Figs. 5 and 7).

In this example also, as in Example 1, the locking device can be used in a single operation (see Fig. 8), and the reliable retention of the fastening member A by the receiving member B becomes possible.

### Example 3,

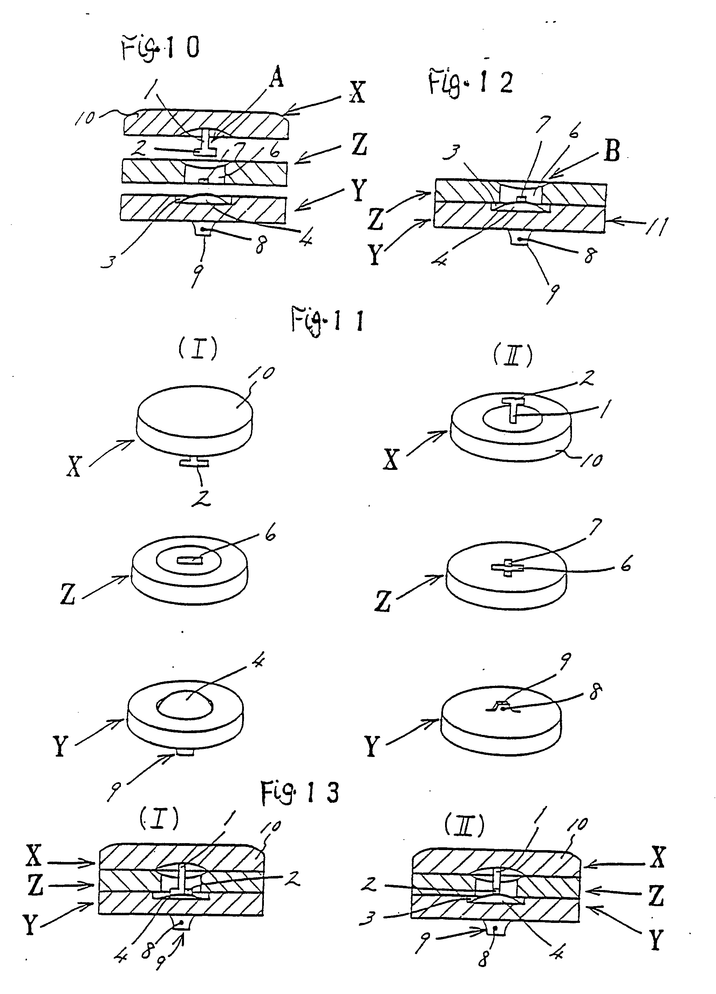

In this example, the invention is applied to a personal ornament which, as shown in Figs. 10 to 13, is composed of three members.

In this case, the fastening member A is attached to the back side of a decorative member (10) to thereby form a first member X, and an attaching member (11) for attaching a button to an article to be ornamented is composed of a second member Y and a third member Z; the receiving member B is formed as part of the two.

The second member Y has on its back side a projection (9) having a hole (8) for sewing a button to an article to be ornamented, such as a fabric, and has a chamber (3) formed in the middle of the surface by recessing the surface, and an resilient member (4) of synthetic resin is installed in the chamber (3) (see Fig. 11). Further, the third member Z has an elongated opening (6) extending through the middle thereof, and a groove-like recess (7) formed in the back side to extend across the elongated opening (6) (see Fig. 11).

Such second and third members Y and Z are put together as shown in Fig. 13 so that the elongated opening (6) and groove-like recess (7) of the third member Z overlie the resilient member(4) of the second member Y. These two members are then bonded together around their peripheries to thereby constitute the attaching member (11) for attachment to an article to be ornamented.

The attachment and detachment of the first mmber X, i.e., the decorative member (10) to and from the attaching member (11) are effected as shown in Fig. 13, in the same manner as in Example 1.

Example 4

This example is one in which the locking device of Example 1 is applied to a personal ornament.

As shown in Fig. 9, the fastening member A is mounted on an attaching member (11') for a button and earring, and the receiving member B is mounted on a decorative member (10), thereby making it possible to removably attach the decorative member (10) easily to both of the attaching member (11) (11') for buttons and earrings; thus, according to the need, the decorative member (10) can be enjoyed as a button or an earring, and the user is allowed to change buttons on his clothes as he likes.

Example 5

The locking device of Example 1 can be changed in size for the following uses.

① The fastening member A is attached to a kettle body while the receiving member A is attached to the handle so that the latter is removably attachable; thus, a kind of kettle can be used as either a single-handed or both-handed kettle by changing the handle.

② The receiving member B is installed on an automobile body while the fastening member A is fastened to the end of a towing rope to thereby make the attachment and detachment of the towing rope very easy and reliable.

③ The front end of a curtain suspending member is formed as the fastening member A while the receiving member B is installed on the lower end of the runner to thereby facilitate the attachment of the runner to the curtain. the locking of the fastening member A to the receiving member B makes the runner integral with the curtain suspending member; thus, the opening and closing of the curtain can be neatly and smoothly effected.

④ The fastening member A is installed on one end of a pipe for constructing a scaffold, while the receiving member B is installed on the side; by locking them together, the assembly of a scaffold is facilitated. Further, the fastening members A or receiving members B may be installed on opposite ends of a pipe, so that such pipes can be locked together end to end until any desired length is obtained.

⑤ The fastening member A is installed on the head of a wall attachment member, such as a screw, while the receiving member B is installed in a suitable position on a building member such as a pipe, whereby the fastening member A can be attached to a wall surface by attaching the screw thereto; thus, even in a place inconvenient for operation, attachment and detachment of building members such as pipes are facilitated.

⑥ The fastening member A is attached to the front end of a fishing rod, while the receiving member A is attached to the proximal end of a fishing line having a fishing device attached to the other end, whereby attachment and detachment of such fishing device are facilitated.

⑦ A band-like member (13) is attached to a ground bait basket (12) for fishing, as shown in Fig. 14 and the receiving member B is attached to said band-like member (13), while the fastening member A is installed on each lever line (15) for suspending a fishing line (14), thereby facilitating attachment and detachment thereof; this arrangement not only makes it easy even for laymen to change fishing needles (14) but also causes the ground bait to scatter in the vicinity of the fishing needles, thereby ensuring very efficient fishing. In addition, the ground bait basket may be of vertical type.

⑧ The receiving member B is attached to a television set, computer, measuring instrument, desk, chair or the like, while the fastening member A is attached to the upper end of each leg, whereby the attachment and detachment of the legs can be effected in a single operation without imparting vibration to the main body.

In the above examples, the fastening member A and receiving member B may be attached in mutually reversed relation. Further, in a use in which pressure acts on the locking portion, a support bar or support plate (16) may be installed at a position spaced a predetermined distance from the rod (2) of the fastening member A lest the rod (2) of the fastening member A should press the resilient member (4) to the greater extent than necessary (see Fig. 15). Further, in an application to a body (17) to be clasped, such as a kettle handle or scaffold, which is difficult to rotate, it is desirable to rotatably attach the receiving member B to the body (17) as by a shaft (18), as shown in Fig. 16.

Further, in the present invention, the fastening member A may be made lockable to the opposite ends of the receiving member B, as shown in Fig. 17, or reversely, the receiving members B may be made lockable to the opposite ends of the fastening member A; in such locking device, connection of various members is greatly facilitated.

INDUSTRIAL APPLICABILITY

The locking device of the invention can be effectively used and it is possible to obtain stabilized locking force due to the spring force. Therefore, it is applicable in a wide range from personal ornaments to building materials. For example, in an application to a personal ornament, exchange of the decorative member is made possible, so that a single decorative member can be enjoyed as various personal ornaments.

## Claims

1. A locking device characterized in that is comprises a T-shaped fastening member A, in which a rod (2) extending perpendicularly to left and right to a support post (1) is fixed to an end of the support post (1), and a receiving member B which has a chamber (3) having a vertically acting resilient member (4) installed herein, an elongated opening (6) formed in the upper wall (5) of the chamber (3), and a groove-like recess (7) fromed in the inner surface of said upper wall (5) transversely of said elongated opening (6), the elongated opening (6) and groove-like recess (7) of the receiving member B being so shaped as to receive the rod (2) of the fastening member A, wherein the rod (2) of the fastening member A is inserted in the elongated opening (6) is the receiving member B and rotated in the chamber (3) up to the position of the groove-like recess (4), so that the repulsive force of the resilient member (4) urges the rod (2) to fit in the groove-like recess (4) of the receiving member B.

2. A personal ornament comprising an attaching member (11) for attachment to an article to be ornamented and a separate decorative member (10), said personal ornament being designed to allow a decorative member (10) to be exchanged, said personal ornament being characterized in that said fastening member A is installed on either said attaching member (11) of said decorative member (10), while said receiving member B is installed on the other.

AMENDED CLAIMS

1. A locking device characterized in that it comprises a T-shaped fastening member A, in which a rod (2) extending perpendicularly to left and right to a support post (1) is fixed to an end of the support post (1), and a receiving member B which has a chamber (3) having a vertically acting resilient member (4) installed herein, an elongated opening (6) formed in the upper wall (5) of the chamber (3), and a groove-like recess (7) fromed in the inner surface of said upper wall (5) transversely of said elongated opening (6), the elongated opening (6) and groove-like recess (7) of the receiving member B being so shaped as to receive the rod (2) of the fastening member A, wherein the rod (2) of the fastening member A is inserted in the elongated opening (6) is the receiving member B and rotated in the chamber (3) up to the position of the groove-like recess (4), so that the repulsive force of the resilient member (4) urges the rod (2) to fit in the groove-like recess (4) of the receiving member B.

2. A locking device as defined in Claim 1, wherein said receiving member B has said elongated opening (6) and said elongated recess (7) on each of the upper and under ends so that said fastening member A may be lockable to the opposite ends of the receiving member B.

3. A personal ornament in which a decorative member is exchangable, characterized in that an attaching member (11) for attachment to an article to be ornamented and a decorative member (10) are separately formed, and

A)   a fastening member A, in which a rod (2) extending perpendicularly to left and right to a support post (1) is fixed to an end of the support post (1), and   ·

B)   a receiving member B, which has a chamber (3) having a vertically acting resilient member (4) installed herein, an elongated opening (6) formed in the upper wall (5) of the chamber (3), and a groove-like recess (7) fromed in the inner · surface of said upper wall (5) transversely of said elongated opening (6), the elongated opening (6) and groove-like recess (7) of the receiving member B being so shaped as to receive the rod (2) of the fastening member A

are set in such a manner as said fastening member A is installed on said attaching member (11) and said decorative member (10) is installed on said receiving member B.

4.   A personal ornament as defined in Claim 3, wherein said attaching member (11) is for attaching a button to an article such as fabric.

5.   A personal ornament as defined in Claim 3, wherein said attaching member (11) is for attaching an earring.

Fig. 2

(I)

A

(II)

Fig. 3

(I)

B

(II)

Fig. 1

(I)

(II)

Fig. 6

(I)

(II)

Fig. 7

(I)

(II)

Fig. 5

Fig. 8

(I)

(II)

Fig. 9

Fig. 1 4

Fig. 1 5

Fig. 1 7

Fig. 1 6

Fig. 10

Fig. 12

Fig. 11

(I)

(II)

Fig. 13

(I)

(II)

# INTERNATIONAL SEARCH REPORT

International Application No  PCT/JP88/00957

## I. CLASSIFICATION OF SUBJECT MATTER (if several classification symbols apply, indicate all) 6

According to International Patent Classification (IPC) or to both National Classification and IPC

Int.Cl$^4$  F16B21/04, A44C17/02, A01K97/02

## II. FIELDS SEARCHED

| Minimum Documentation Searched 7 | |
|---|---|
| Classification System | Classification Symbols |
| IPC | F16B21/04, 5/10, 7/20, A44C17/02 |

| Documentation Searched other than Minimum Documentation to the Extent that such Documents are Included in the Fields Searched 8 | |
|---|---|
| Jitsuyo Shinan Koho | 1926 - 1988 |
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, U, 48-18461 (Takagi Tadao) 2 March 1973 (02. 03. 73) (Family: none) | 1 |
| Y | JP, Y1, 30-1082 (Matsushita Electric Works, Ltd.) 28 January 1955 (28. 01. 55) (Family: none) | 1 |
| X | JP, Y1, 46-13268 (Takeda Shiro) 12 May 1971 (12. 05. 71) (Family: none) | 2 |
| A | JP, U, 59-177813 (Fujitsu Ltd.) 28 November 1984 (28. 11. 84) Fig. 11 (Family: none) | 1 |
| A | JP, Y1, 45-1931 (Yokoo Seisakusho Kabushiki Kaisha) 27 January 1970 (27. 01. 70) (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 5, 1988 (05. 12. 88) | December 19, 1988 (19. 12. 88) |
| International Searching Authority | Signature of Authorized Officer |
| Japanese Patent Office | |

Form PCT/ISA/210 (second sheet) (January 1985)

**FURTHER INFORMATION CONTINUED FROM THE SECOND SHEET**

| A | JP, Y2, 53-48156 (Tanaka Teruaki)<br>17 November 1978 (17. 11. 78)<br>(Family: none) | 2 |
|---|---|---|

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers............ because they relate to subject matter [12] not required to be searched by this Authority, namely:

2.☐ Claim numbers............ because they relate to parts of the international application that do not comply with the prescribed require-ments to such an extent that no meaningful international search can be carried out [13], specifically:

**VI.☐ OBSERVATIONS WHERE UNITY OF INVENTION IS LACKING [·]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest

☐ No protest accompanied the payment of additional search fees.

Form PCT/ISA/210 (supplemental sheet (2)) (October 1981)